## Europäisches Patentamt
## European Patent Office
## Office européen des brevets

(11) Numéro de publication : **0 161 165**
**B1**

(12) **FASCICULE DE BREVET EUROPÉEN**

(45) Date de publication du fascicule du brevet :
26.04.89

(51) Int. Cl.⁴ : **F 16 L 27/08**

(21) Numéro de dépôt : **85400699.6**

(22) Date de dépôt : **09.04.85**

(54) **Joints tournants d'installation de transfert de fluide.**

(30) Priorité : 12.04.84 FR 8405795

(43) Date de publication de la demande :
13.11.85 Bulletin 85/46

(45) Mention de la délivrance du brevet :
26.04.89 Bulletin 89/17

(84) Etats contractants désignés :
DE FR GB IT

(56) Documents cités :
FR—A— 608 847
FR—A— 1 253 963
FR—A— 2 073 048
FR—A— 2 242 631
GB—A— 883 498
GB—A— 1 202 527
GB—A— 1 403 756
US—A— 2 918 313
US—A— 3 239 249
US—A— 3 244 440

(73) Titulaire : FMC EUROPE S.A. Société anonyme dite:
Route des Clérimois B.P.91
F-89103 Sens (FR)

(72) Inventeur : Fusy, Joel
2 rue St-Martin Barrault
F-89260 Thorigny-sur-Oreuse (FR)

(74) Mandataire : Rinuy, Santarelli
14, avenue de la Grande Armée
F-75017 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention se rapporte aux joints tournants d'installation de transfert de fluide.

On connaît déjà par les documents GB-A-1 202 527, FR-A-1 253 963, US-A-2 918 313 et FR-A-608 847 des raccords tournants à rotule sphérique ou équivalent. Le document GB-A-1 202 527, voire FR-A-1 253 963 ou US-A-2 918 313, prévoient même la combinaison de deux telles rotules qui permettent un déplacement radial immanquablement accompagné d'un déplacement axial.

On connaît par ailleurs, par le document FR-A-2 242 631 un raccord statique tolérant des déplacements radiaux pour tenir compte de dilatations.

Les joints tournants selon l'invention s'appliquent avantageusement mais non exclusivement, aux bras articulés de transfert (chargement ou déchargement d'un navire par exemple) de produits fluides, du type général comportant une embase, un tube interne et un tube externe articulés entre eux, le tube interne pivotant sur l'embase et le tube externe portant un ensemble à coudes par exemple.

La présente invention vise d'une façon générale un joint tournant pour installation de transfert de fluide comportant au moins deux pièces tournantes montées en translation l'une par rapport à l'autre, constituant un raccord autorisant simultanément une rotation étanche, un ajustement radial sans ajustement axial, et une reprise d'efforts extérieurs.

L'invention propose un joint tournant pour installation de transfert de fluide, comportant deux pièces tournantes attelées axialement l'une à l'autre avec liberté de rotation relative ainsi que des moyens d'étanchéité, chacune de ces pièces comportant une bride transversale perpendiculaire à son axe, caractérisé en ce qu'il comporte un dispositif d'attelage axial adapté à maintenir ces brides transversales parallèles l'une à l'autre avec un écartement constant, lequel dispositif est muni de moyens de guidage de ces brides parallèlement l'une à l'autre, aussi bien en rotation relative qu'en translation relative selon au moins une trajectoire, grâce à quoi ce joint tournant autorise une rotation de ces pièces avec mouvement transversal relatif de leurs axes, tout en assurant une étanchéité au produit véhiculé et tout en permettant la transmission d'efforts extérieurs, notamment axiaux, radiaux et de flexion, d'une des pièces tournantes à l'autre.

Suivant des formes de réalisation de l'invention le joint tournant comprend deux pièces tournantes montées excentriques c'est-à-dire avec possibilité de déplacement de l'axe d'une pièce sur la circonférence d'un cercle ayant pour centre l'axe de l'autre pièce.

Suivant d'autres formes de réalisation de l'invention le joint tournant comprend deux pièces tournantes montées en translation c'est-à-dire libres en toute translation sur une surface limitée circonférentiellement.

D'autres caractéristiques et avantages de la présente invention ressortiront de la description qui va suivre faite en regard des dessins annexés sur lesquels :

— les figures 1 et 2 sont des vues schématiques d'un joint tournant à excentration conforme à l'invention ;

— les figures 3 et 4 représentent également schématiquement une autre forme de réalisation mais celle-ci à double excentrique ;

— les figures 5 et 6 sont des schémas représentant une forme de réalisation de joint tournant à translation ;

— la figure 5A est une vue de détail d'une garniture d'étanchéité ;

— la figure 7 représente schématiquement une variante de joint tournant à translation ;

— les figures 7A, 7B et 7C sont des vues de détail de variantes montrant des pièces de frottement ;

— la figure 8 représente une utilisation de joints tournants selon l'invention ;

— la figure 9 est une vue de détail représentant partiellement en coupe un joint tournant (40) ;

— la figure 10 est une vue de détail d'une variante ;

— la figure 11 est une vue schématique d'un joint tournant (50) ;

— la figure 12 en est un schéma explicatif ;

— la figure 13 est un schéma explicatif de l'utilisation selon les figures 8 et 9 ;

— la figure 14 représente une autre utilisation de joint tournant selon l'invention ;

— la figure 15 représente en coupe partielle le joint (40) de cette utilisation ;

— la figure 16 est un schéma explicatif de l'utilisation selon les figures 14 et 15 ;

— la figure 17 représente encore une autre utilisation de joint tournant selon l'invention ;

— la figure 18 est une vue de détail partiellement en coupe du joint (40) de cette utilisation ;

— la figure 19 représente encore une autre utilisation de joint tournant selon l'invention ;

— la figure 20 est une vue de détail partiellement en coupe du joint (40) de cette utilisation ;

— la figure 21 est une vue en élévation d'un bras de chargement ou de déchargement du type « marine » à structure ;

— la figure 22 est une vue en coupe montrant la disposition des isolants thermiques du bras selon la figure 21 ; et

— la figure 23 est une vue en coupe d'une variante de structure de bras.

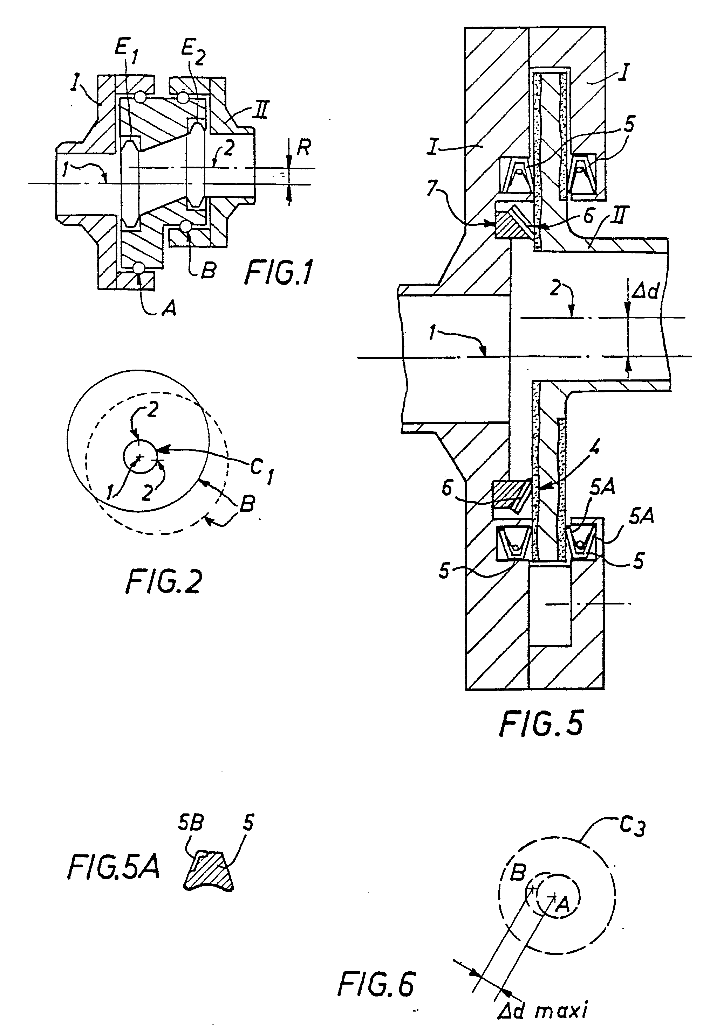

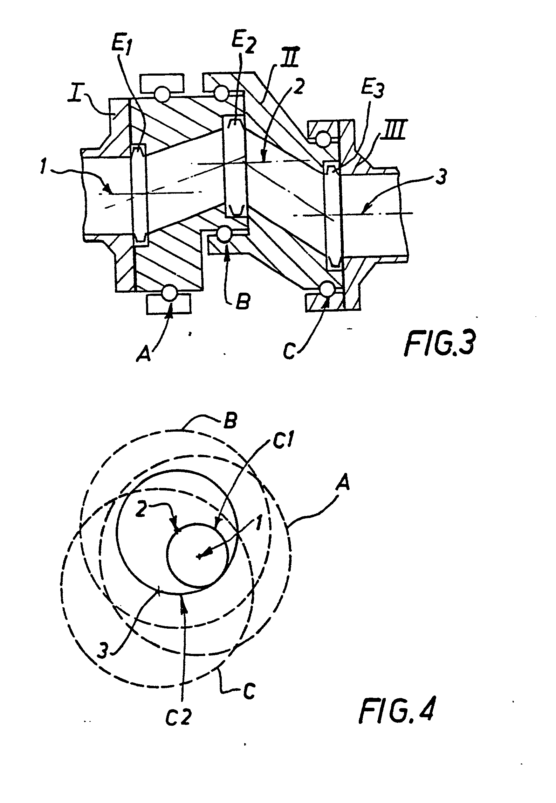

Dans la forme de réalisation schématisée aux figures 1 et 2 le joint tournant montre une pièce tournante (I) et une pièce tournante (II) d'une installation de transfert de fluide, des chemins de roulement à billes (A) et (B) et une double étanchéité (E1, E2).

La figure 2, en particulier, fait apparaître la circonférence d'un cercle (C1) de rayon (R) ayant pour centre l'axe (1) de la pièce (I). Un déplacement de l'axe (2) de la pièce II se produit sur la circonférence dudit cercle.

Cette forme de réalisation fait partie du groupe de formes de réalisations dites à excentration.

Dans ce groupe également peut être rangée une réalisation suivant laquelle une rotation à double excentrique est prévue (Figs. 3 et 4).

Dans ce cas il est considéré une pièce supplémentaire (III) d'axe (3).

La figure 4, en particulier, fait apparaître la circonférence du cercle (C1) de rayon (R) ayant pour centre l'axe (1) de la pièce (I) ainsi qu'une circonférence du cercle (C2) de rayon (2R) ayant pour centre l'axe (2) de la pièce (II).

Le déplacement de l'axe (2) de la pièce (II) se produit sur la circonférence du cercle (C1).

Un déplacement de l'axe (3) de la pièce (III) se produit sur la circonférence du cercle (C2).

Il est considéré dans cette forme de réalisation trois roulements (A, B et C) et une triple étanchéité (E1, E2, E3).

Dans la forme de réalisation schématisée aux figures 5 et 6 le joint tournant offre la possibilité d'une translation dans un plan perpendiculaire aux axes 1 et 2 des pièces I et II. Cette solution demande que les deux pièces soient fixées par ailleurs pour la reprise des efforts extérieurs.

La figure 6, en particulier, fait apparaître le cercle (C3) délimitant la possibilité de translation de l'une des pièces (II axe 2) par rapport à l'autre (I axe 1).

Le déplacement de translation maximum par rapport aux axes des pièces est indiqué en (Δ d) sur les deux figures 5 et 6.

Dans cette forme de réalisation la pièce I revêt la forme d'une bride annulaire enveloppante et la pièce II celle d'une bride plate annulaire glissée à l'intérieur de la bride enveloppante avec un certain jeu.

La bride plate est pourvue sur ses deux faces d'un dépôt (4) du type carbure de tungsgène.

La bride annulaire enveloppante est pourvue, à l'intérieur de sa partie enveloppante, et de part et d'autre de la bride plate; de garnitures d'étanchéité (5) à lèvres (5A). Chaque garniture montre deux lèvres disposées angulairement de manière que la garniture s'ouvre vers l'intérieur.

Dans la variante de la Figure 5A la garniture est de forme trapézoïdale pleine avec une incurvation de la grande base et un renfort d'arête.

La bride enveloppante comporte, de plus, (Fig. 5) un joint racleur (6) pour éliminer les dépôts laissés par le produit transféré par l'installation, lors du déplacement relatif des pièces (I) et (II). Ce joint racleur est placé dans une gorge (7) pratiquée sur l'une des faces intérieures de la bride enveloppante ou pièce (I) et vient porter contre la face en vis-à-vis de la bride plate ou pièce (II) pourvue du dépôt (4).

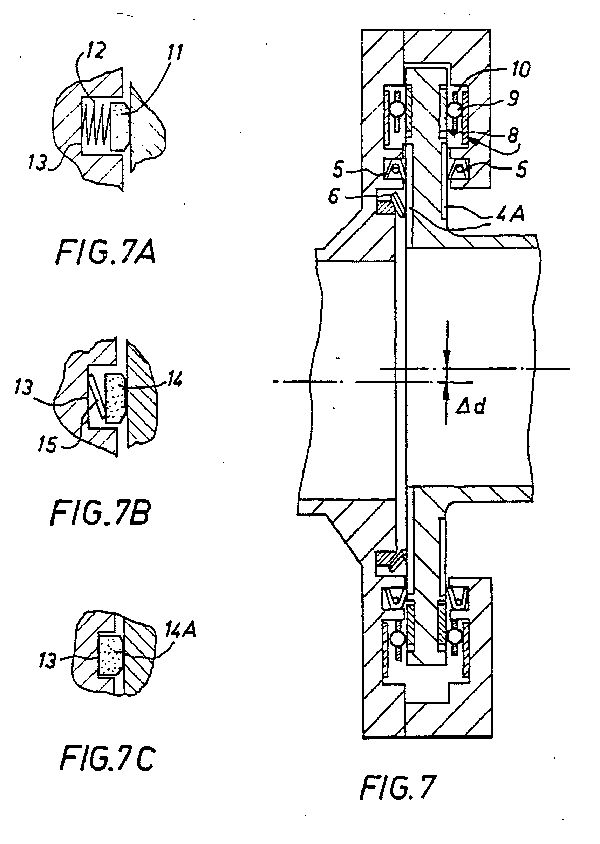

Selon une variante représentée à la figure 7 la bride enveloppante ou pièce I comme la bride plate ou pièce (II) sont pourvues de rondelles (8) de dureté appropriée pour servir de chemins de roulement à des billes (9) maintenues dans des cages (10).

Dans cette variante, les dépôts (4) peuvent être remplacés par des recharges (4A) en un matériau compatible avec le frottement du racleur (6) et l'étanchéité des garnitures (5).

Selon d'autres variantes représentées aux figures 7A, 7B, 7C les roulements à billes (8, 9, 10) sont remplacés respectivement :

— par des pastilles de frottement (11) montées sur ressort (12) à l'intérieur d'une gorge (13) pratiquée sur l'une des faces intérieures de la bride enveloppante ou pièce (I) (Fig. 7A) ;

— par une rondelle de frottement (14) montée sur ressort (15) à l'intérieur d'une gorge (13) pratiquée sur l'une des faces intérieures de la bride enveloppante ou pièce (I) (Fig. 7B) ;

— par une simple rondelle de frottement (14A) placée dans une gorge (13) pratiquée sur l'une des faces intérieures de la bride enveloppante ou pièce (I) (Fig. 7C).

Le fait de pouvoir utiliser des joints tournants sans billes sur la ligne produit fait qu'il est inutile de devoir démonter le joint tournant.

Le changement de garniture uniquement peut être envisagé.

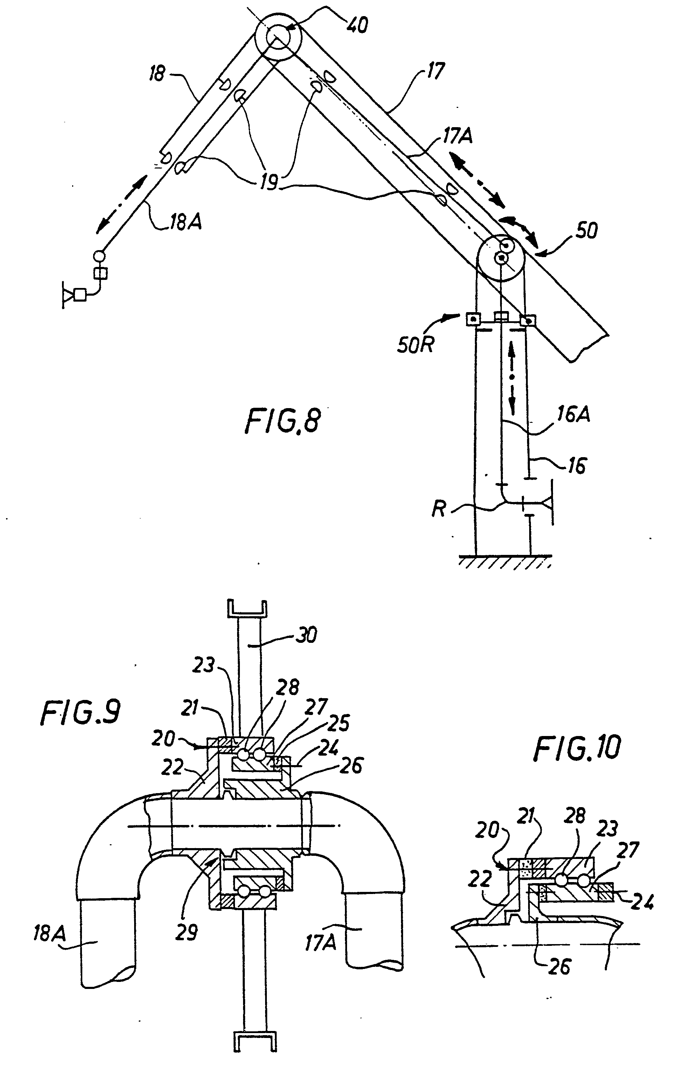

Une utilisation des joints tournants selon l'invention est exposée ci-après en regard des figures 8 et 9 et se rapporte aux bras de chargement ou déchargement de produits pétroliers ou chimiques, soumis à des variations de température importantes (température de la ligne ou conduite de produit).

L'application ou utilisation est envisagée à titre d'exemple sur les bras ayant une structure (16, 17, 18) porteuse de la ligne de produits (16A, 17A, 18A).

Suivant cette application de l'invention :

— la ligne de produit participe à la reprise de certains efforts en la rendant solidaire de la structure ;

— les doubles rotations au niveau du joint tournant (40) tube interne-tube externe, comme au niveau du joint tournant (50) tube interne-embase (une pour la structure, une pour la ligne) sont supprimées.

Le tube externe de produit (18A) est rendu solidaire de la structure le plus près possible du joint (40) et il est laissé coulissant sur la structure externe.

Le tube interne de produit (17A) est rendu solidaire de la structure en un point et il est laissé coulissant aux autres points de liaison avec la structure grâce à des supports coulissants (19) avec isolant thermique.

Le joint (50R) (autour de l'axe vertical de l'embase), de la ligne de produit est attaché sur celle de la structure.

Un ou deux joints tournants conforme à l'invention avec possibilité d'excentration sont utilisés pour rendre le tube interne (17A) de la ligne de produit libre de se dilater ou contracter.

Le tube externe (18A) est libre de se contracter ou dilater grâce à des supports coulissants (19) avec isolant thermique montés sur la structure.

L'embase (16A) est libre de se contracter ou dilater.

Le coude (R) est libre de se contracter ou dilater grâce à un joint tournant excentré selon l'invention.

Le joint tournant (40) est représenté plus en détail sur la figure 9.

Un boulonnage (20) fait la liaison entre des éléments de joint externes de la ligne de produit (18A) et de la structure (18) avec interposition d'un isolant thermique (21). L'élément externe de la ligne de produit est une bride (22) et l'élément externe de structure est un embout femelle (23) ;

Un autre boulonnage (24) fait la liaison entre des éléments d'articulation internes de la ligne de produit (17A) et de la structure (17) avec interposition d'un isolant thermique (25). L'élément interne de la ligne de produit est un manchon à collerette (26) et l'élément interne de structure est un embout mâle (27).

Des roulements (28) sont placés entre l'embout femelle (23) et l'embout mâle (27).

Une garniture d'étanchéité tournante (29) est disposée entre la bride (22) et le manchon à collerette (26).

La poulie de pantographe est visible en (30).

Suivant une variante représentée à la figure 10 l'embout femelle (23) constituant l'élément d'articulation externe de structure et l'embout mâle (27) constituant l'élément d'articulation interne de structure sont rejetés à l'extérieur et non plus compris entre l'élément d'articulation externe de ligne de produit ou bride (22) et l'élément d'articulation interne de ligne de produit ou manchon (26) comme sur la figure 9.

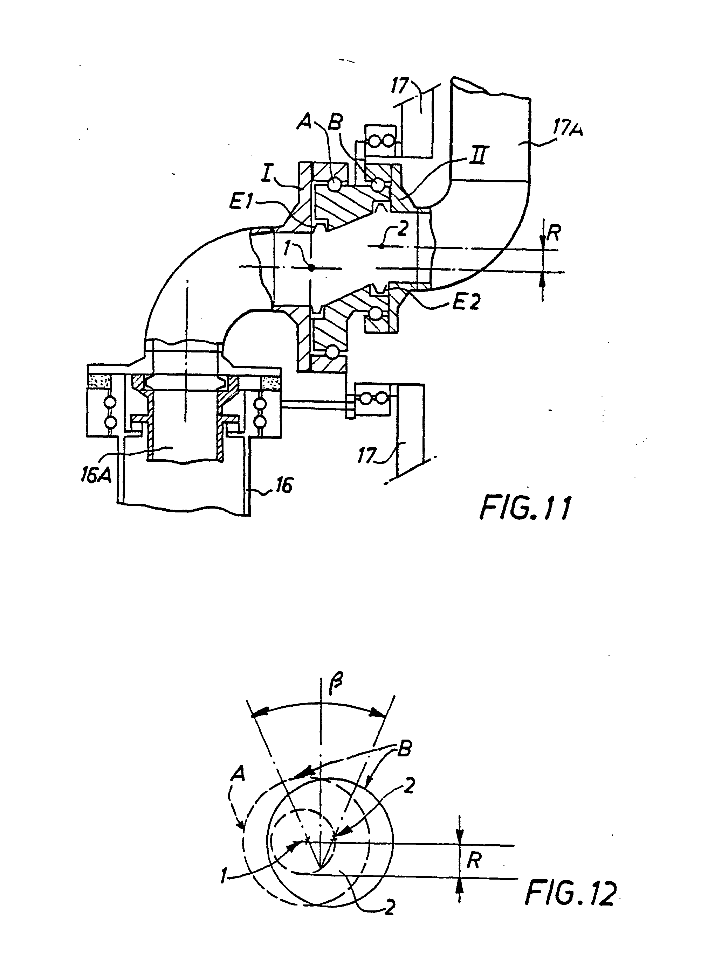

Le joint tournant (50) est représenté plus en détail sur la figure 11. On retrouve cependant les pièces tournantes (I) et (II) de la figure 1 avec leurs axes respectifs (1) et (2), les étanchéités (E1) et (E2) et les roulements (A) et (B).

Sur cette figure est représentée également l'articulation (50R) autour de l'axe vertical de l'embase.

Par ailleurs la figure 12 est elle-même comparable à la figure 2 avec l'indication en plus de l'angle (β) de débattement et du rayon (R) d'excentration.

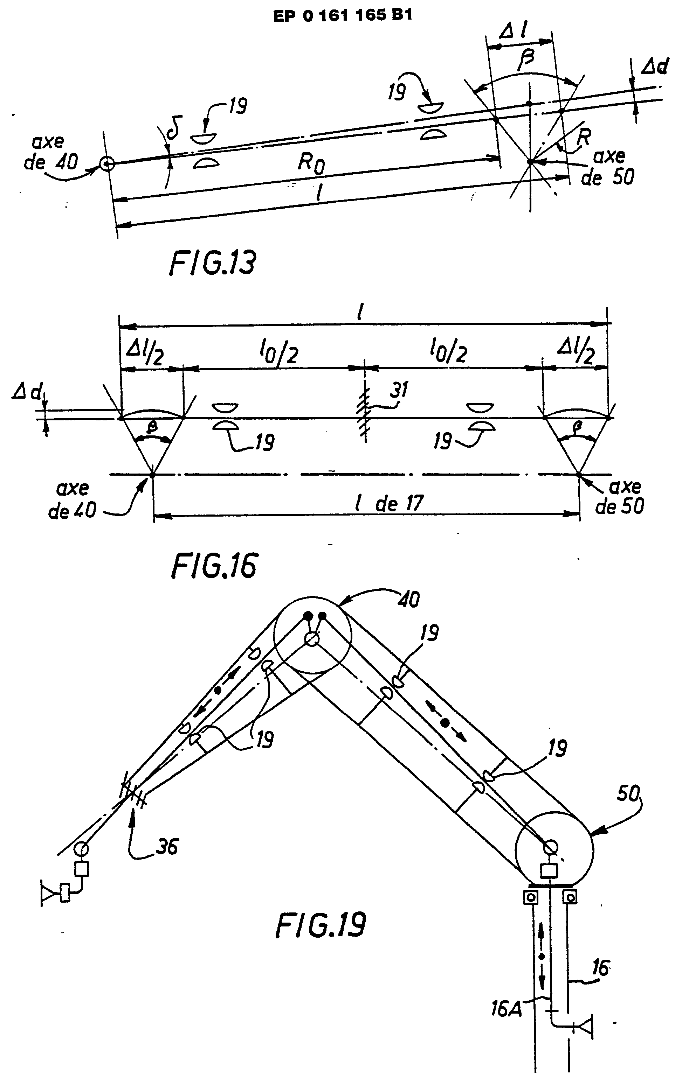

En se reportant à présent au schéma de la figure 13 on voit que le tube interne (17A) de la ligne de produit se contracte ou se dilate de Δ l. En choisissant le rayon R d'excentration, et l'angle de débattement β en fonction de Δ l, le déplacement Δ d peut être minimisé et ainsi donc être acceptable comme étant ≤ au jeu fonctionnel des supports coulissants (19).

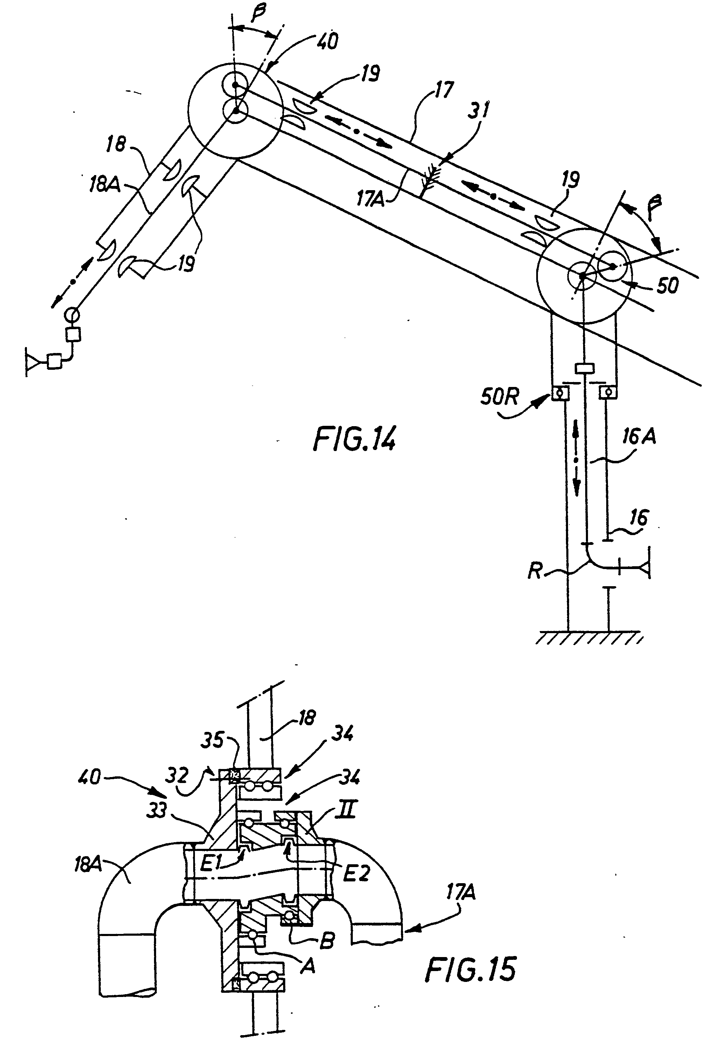

Toujours dans le même cadre d'utilisation que précédemment exposé et suivant une autre forme de réalisation représentée aux figures 14 et 15 le bras de chargement ou de déchargement montre un joint (40) à rotation excentrique de la ligne de produit et un joint (50) identique à celui représenté à la figure 11.

Le tube externe (18A) de la ligne de produit est libre de se dilater ou contracter et une fixation rigide de ladite ligne de produit sur la structure est prévue en (31).

Le tube interne (17A) est libre de se dilater ou contracter grâce à deux rotations excentriques prévues au joint (40) et au joint (50).

L'embase (16A) est libre de se contracter ou de se dilater et le coude (R) est libre de se contracter ou dilater grâce au joint tournant excentré.

Le joint (40) est représenté plus en détail à la figure 15.

Un boulonnage (32) réunit une bride (33) reliée au tube externe (18A) de la ligne de produit à une rotation (34) de l'élément de structure externe (18) avec interposition d'un isolant thermique (35).

Une rotation à excentrique semblable à celle des figures 1 et 11 est disposée entre le tube externe (18A) et le tube interne (17). On y retrouve les éléments (I ou 33) et (II) les roulements (A) et (B) et les étanchéités (E1) et (E2).

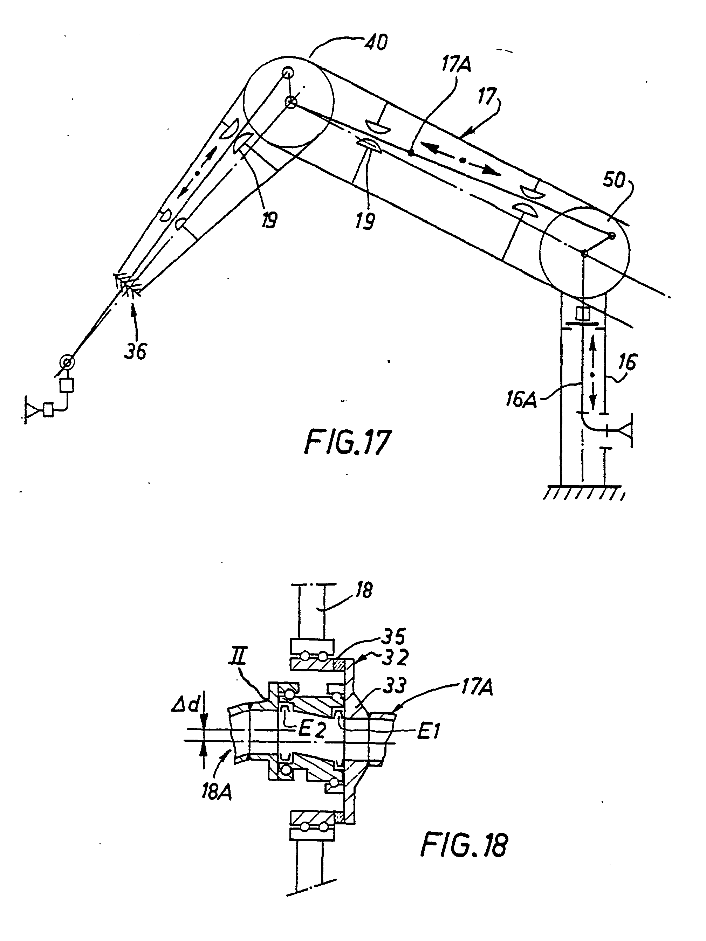

En se reportant au schéma de la figure 16 on voit que le tube interne se dilate ou se contracte de Δ l. En choisissant le rayon R d'excentration, et l'angle de débattement β en fonction de Δ l le déplacement Δ d peut être minimisé. Par rapport à la forme de réalisation de la figure 13, Δ d est encore plus réduit grâce aux deux joints tournants excentriques.

Dans encore une autre forme de réalisation représentée aux figures 17 et 18 une fixation rigide (36) est prévue entre le tube externe (18A) de la ligne de produit et l'élément externe de structure (18).

Une rotation à excentrique est prévue au joint (40) comme au joint (50).

La figure 18 montre plus en détail le joint (40). Elle est exactement le symétrique de celle de la figure 15 la bride (33 ou I) étant rattachée dans ce cas au tube interne (17A) au lieu du tube externe (18A) toutes choses étant égales par ailleurs.

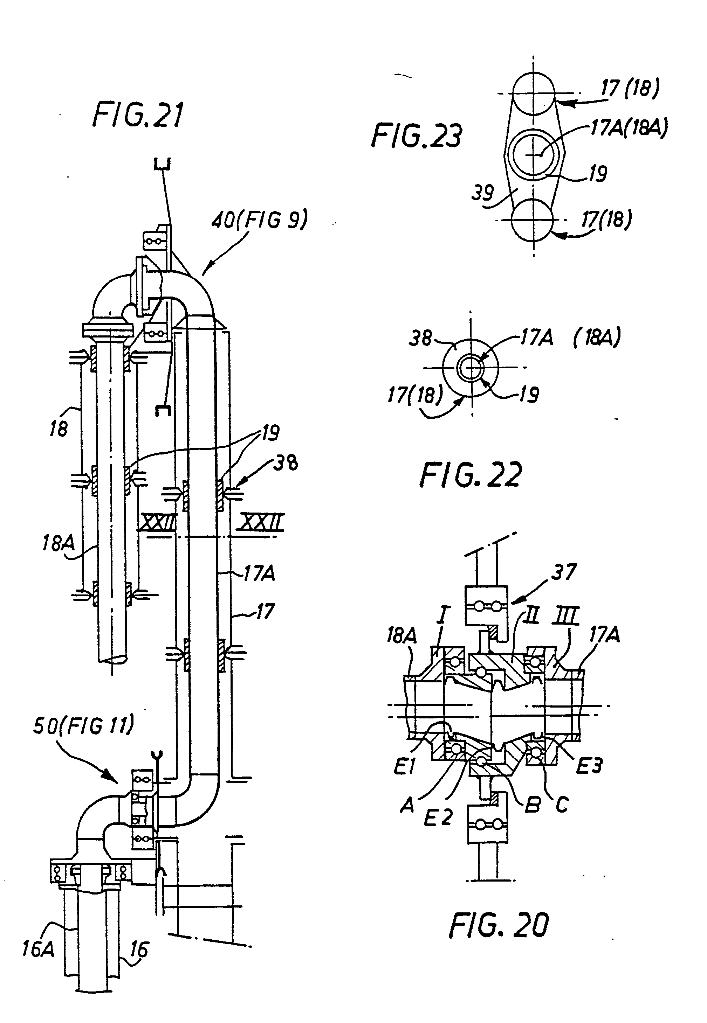

La forme de réalisation de la figure 19 montre également une fixation rigide (36) entre le tube externe (18A) de la ligne de produit et l'élément externe de structure (18).

Toutefois le joint tournant (40) est à double excentrique (Fig. 20).

Comme sur la figure 3 on y voit les pièces (I, II et III) avec les roulements (A, B et C) et les étanchéités (E1, E2 et E3).

On voit, en plus, une rotation de structure (37).

A titre d'exemple non limitatif un bras de chargement ou de déchargement du type « marine » à structure est représenté à la figure 21. Il est équipé d'un joint tournant (40) semblable à celui représenté à la figure 9 et d'un joint tournant (50) semblable à celui représenté à la figure 11.

La structure aussi bien dans sa portion bras interne (17) que dans sa portion bras externe (18) est concentrique à la ligne de produit (17A) et (18A).

Les isolants thermiques (19) sont disposés de place en place entre la ligne de produit (17A) et (18A) et des saillies annulaires intérieures (38) (voir également à ce propos la vue en coupe de la figure 22).

Dans une variante conforme à la Figure 23 la structure (17) (18) est double (deux poutres parallèles à entretoises 39) des joints isolants (19) étant placés entre la ligne de produit et les entretoises.

D'une façon générale toutes les formes de réalisation sont applicables avec ou sans :

— simple ou double étanchéité des joints tournants ;

— toute conception de joint tournant permettant des translations des axes de sortie ;

— tout support coulissant avec ou sans isolation thermique ;

— les bras ayant une structure et une ligne produit distinct.

**Revendications**

1. Joint tournant pour installation de transfert de fluide, comportant deux pièces tournantes (I, II) attelées axialement l'une à l'autre avec liberté de rotation relative ainsi que des moyens d'étanchéité (E1, E2, E3, 5), chacune de ces pièces comportant une bride transversale perpendiculaire à son axe (1, 2), caractérisé en ce qu'il comporte un dispositif d'attelage axial (A-B ; A-B-III ; I) adapté à maintenir ces brides transversales parallèles l'une à l'autre avec un écartement constant, lequel dispositif est muni de moyens de guidage (A, B ; A, B, C ; 4, 9-10, 11, 14) de ces brides parallèlement l'une à l'autre, aussi bien en rotation relative qu'en translation relative selon au moins une trajectoire, grâce à quoi ce joint tournant autorise une rotation de ces pièces avec mouvement transversal relatif de leurs axes, tout en assurant une étanchéité au produit véhiculé et tout en permettant la transmission d'efforts extérieurs, notamment axiaux, radiaux et de flexion, d'une des pièces tournantes à l'autre.

2. Joint tournant selon la revendication 1 caractérisé en ce que les deux pièces tournantes sont montées excentriques c'est-à-dire avec possibilité de déplacement de l'axe d'une pièce sur la circonférence d'un cercle ayant pour centre l'axe de l'autre pièce.

3. Joint tournant selon la revendication 1 caractérisé en ce que les brides transversales sont libres en toute translation sur une surface plane limitée circonférentiellement.

4. Joint tournant selon l'une quelconque des revendications 1 et 2 caractérisé en ce qu'il comporte entre les brides des chemins de roulement à billes (A) et (B) et une double étanchéité (E1, E2).

5. Joint tournant selon l'une quelconque des revendications 1 et 2 caractérisé en ce qu'une rotation à double excentrique est prévue entre les brides, avec donc une pièce supplémentaire (III) d'axe (3), trois roulements (A, B, et C) et une triple étanchéité (E1, E2, E3).

6. Joint tournant selon la revendication 3 caractérisé en ce que la pièce (I) revêt la forme d'une bride annulaire enveloppante et la pièce (II) celle d'une bride plate annulaire glissée avec jeu à l'intérieur de la bride enveloppante ; la bride annulaire enveloppante étant pourvue, à l'intérieur de sa partie enveloppante, et de part et d'autre de la bride plate, de garnitures d'étanchéité (5) à lèvres (5A) ; la bride enveloppante comportant, de plus, un joint racleur (6) pour éliminer des dépôts laissés par le produit transféré par l'installation, lors du déplacement relatif des pièces (I) et (II).

7. Joint tournant selon la revendication 6 caractérisé en ce que les garnitures sont de forme trapézoïdale pleine avec une incurvation de la grande base et un renfort d'arête.

8. Joint tournant selon la revendication 6 caractérisé en ce que la bride enveloppante (I) comme la bride plate (II) sont pourvues de rondelles (8) de dureté appropriée formant chemins de roulement à des billes (9) maintenues dans des cages (10).

9. Joint tournant selon la revendication 6, caractérisé en ce que la bride plate (II) comporte, au moins axialement en regard des garnitures d'étanchéité et du joint racleur, d'un dépôt du type carbure de tungstène.

10. Joint tournant selon la revendication 6 caractérisé en ce que la bride plate comporte des recharges (4A) en un matériau compatible avec le frottement du racleur (6) et l'étanchéité des garnitures (5).

11. Utilisation du joint tournant selon l'une quelconque des revendications 1 à 10 à des bras de chargement ou déchargement de produits pétroliers ou chimiques, susceptibles d'être soumis à des variations de température importantes, caractérisée en ce que les bras ont une structure (16, 17, 18) porteuse d'une ligne de produits (16A, 17A, 18A) : la ligne de produit participant à la reprise de certains efforts en la rendant solidaire de la structure ; un joint étant prévu au niveau du joint tournant (40) tube interne-tube externe, comme au niveau du joint tournant (50) tube interne-embase.

12. Utilisation selon la revendication 11 caractérisée en ce que le tube externe de produit (18A) est solidaire de la structure le plus près possible du joint (40) et il est coulissant sur la structure externe et le tube interne de produit (17A) est solidaire de la structure en un point et il est coulissant en d'autres points de liaison avec la structure grâce à des supports coulissants (19) avec isolant thermique.

13. Utilisation selon la revendication 12 caractérisé en ce qu'un boulonnage (20) fait la liaison entre des éléments de joints externes de la ligne de produit (18A) et de la structure (18) avec interposition d'un isolant thermique (21) ; l'élément externe de la ligne de produit étant une bride (22) et l'élément externe de structure étant un embout femelle (23) ; un autre boulonnage (24) fait la liaison entre des éléments d'articulation internes de la ligne de produit (17A) et de la structure (17) avec interposition d'un isolant thermique (25) ; l'élément interne de la ligne de produit étant un manchon à collerette (26) et l'élément interne de structure étant un embout mâle (27) ; des roulements (28) sont placés entre l'embout femelle (23) et l'embout mâle (27) ; une garniture d'étanchéité tournante (29) est disposée entre la bride (22) et le manchon à collerette (26).

14. Utilisation selon la revendication 13 caractérisée en ce que l'embout femelle (23) constituant l'élément d'articulation externe de structure et l'embout mâle (27) constituant l'élément d'articulation interne de structure sont à l'extérieur du joint.

15. Utilisation de joint tournant selon l'une quelconque des revendications 1 à 10 à des bras de chargement ou déchargement de produits pétroliers ou chimiques, susceptibles d'être soumis à des variations de température importantes, caractérisée en ce que le tube externe (18A) de la ligne de produit est libre de se dilater ou contracter et une fixation rigide de ladite ligne de produit sur la structure est prévue en (31) ; le tube interne (17A) est libre de se dilater ou contracter grâce à deux rotations excentriques prévues au joint (40) et au joint (50).

16. Utilisation selon la revendication 15 caractérisée en ce qu'un boulonnage (32) réunit une bride (33) reliée au tube externe (18A) de la ligne de produit à une rotation (34) de l'élément de structure externe (18) avec interposition d'un isolant thermique (35).

17. Utilisation de joint tournant selon l'une quelconque des revendications 1 à 10 et se rapportant aux bras de chargement ou déchargement de produits pétroliers ou chimiques, soumis à des variations de température importantes caractérisée en ce qu'une fixation rigide (36) est prévue entre le tube externe (18A) de la ligne de produit et l'élément externe de structure (18) ; une rotation à excentrique est prévue au joint (40) comme au joint (50).

18. Utilisation de joint tournant selon l'une quelconque des revendications 1 à 10 et se rapportant aux bras de chargement ou déchargement de produits pétroliers ou chimiques, soumis à des variations de température importantes caractérisée en ce qu'elle comprend une fixation rigide (36) entre le tube externe (18A) de la ligne de produit et l'élément externe de structure (18) ; un joint tournant (40) à double excentrique et, en plus, une rotation de structure (37).

19. Utilisation de joint tournant selon l'une quelconque des revendications 1 à 10 et relative à un bras de chargement ou de déchargement du type « marine » à structure ; caractérisée en ce que la structure aussi bien dans sa portion bras interne (17) que dans sa portion bras externe (18) est concentrique à la ligne de produit (17A) et (18A) et en ce que les isolants thermiques (19) sont disposés de place en place entre la ligne de produit (17A) et (18A) et des saillies annulaires intérieures (38).

## Claims

1. A rotary joint for a fluid transfer installation, comprising two rotary members (I, II) axially connected to one another with relative freedom of rotation, as well as sealing means (E1, E2, E3, 5), each of these members comprising a transverse collar perpendicular to its axis (1, 2), characterised in that it comprises an axial connecting device (A-B ; A-B-III ; I) adapted to keep these transverse collars parallel to one another with constant spacing, said device being equipped with means (A, B ; A, B, C ; 4, 9-10, 11, 14) for guiding these collars parallel to one another both in relative rotation and in relative translation along at least one path, as a result of which, this rotary joint permits rotation of these members with relative transverse movement of their axes, while ensuring sealing for the product conveyed, and while permitting the transmission of external pressures, particularly thrust loads, radial loads and bending stress, from one of the rotary members to the other.

2. A rotary joint according to Claim 1, characterised in that the two rotary members are mounted eccentrically, that is to say with the possibility of displacement of the axis of one member over the circumference of a circle having the axis of the other member as its centre.

3. A rotary joint according to Claim 1, characterised in that the transverse collars are free for any translation over a plane surface bounded circumferentially.

4. A rotary joint according to either one of Claims 1 and 2, characterised in that it comprises ball bearing tracks (A) and (B) and a double sealing means (E1, E2) between the collars.

5. A rotary joint according to either one of Claims 1 and 2, characterised in that a rotation with double eccentricity is provided between the collars with, therefore, an additional member (III) with an axis (3), three rolling bearings (A, B and C) and a triple sealing means (E1, E2, E3).

6. A rotary joint according to Claim 3, characterised in that the member (I) assumes the form of a surrounding annular collar and the member (II) that of a flat annular collar sliding with play inside the surrounding collar, the surrounding annular collar being provided, inside its surrounding portion and on both sides of the flat collar, with packings (5) with lips (5A), the surrounding collar further comprising a scraping seal (6) to eliminate deposits left by the product transferred by the installation, on relative displacement of the members (I) and (II).

7. A rotary joint according to Claim 6, characterised in that the packings have a solid trapezoidal shape with incurvation of the large base and edge reinforcement.

8. A rotary joint according to Claim 6, characterised in that both the surrounding collar (I) and the flat collar (II) are provided with rings (8) of suitable hardness forming rolling tracks for balls (9) held in cages (10).

9. A rotary joint according to Claim 6, characterised in that the flat collar (II) comprises a deposit of the tungsten carbide type at least axially facing the packings and the scraping seal.

10. A rotary joint according to Claim 6, characterised in that the flat collar comprises fillings (4A) of a material compatible with the friction of the scraper (6) and the fluid-tightness of the packings (5).

11. The use of the rotary joint according to any one of Claims 1 to 10 on arms for the loading or unloading of petroleum or chemical products, which arms are liable to be subjected to great variations in temperature, characterised in that the arms have a structure (16, 17, 18) carrying a product line (16A, 17A, 18A), the product line participating in taking up certain stresses by being rigidly connected to the structure, a joint being provided at the level of the rotary joint (40) between internal tube and external tube and at the level of the rotary joint (50) between internal tube and base.

12. A use according to Claim 11, characterised in that the external product tube (18A) is rigidly connected to the structure as close as possible to the joint (40) and slides on the external structure, and the internal product tube (17A) is rigidly connected to the structure at one point and slides at other points of connection to the structure thanks to sliding supports (19) with thermal insulation.

13. A use according to Claim 12, characterised in that bolting (20) forms the connection between elements of external joints of the product line (18A) and of the structure (18) with the interposition of a thermal insulator (21), the external element of the product line being a collar (22) and the external element of the structure being a female end (23), other bolting (24) forms the connection between the internal articulation elements of the product line (17A) and of the structure (17) with the interposition of a thermal insulator (25), the internal element of the product line being a flanged sleeve (26) and the internal element of the structure being a male end (27), rolling bearings (28) being placed between the female end (23) and the male end (27) and a rotary packing (29) being disposed between the collar (22) and the flanged sleeve (26).

14. A use according to Claim 13, characterised in that the female end (23) constituting the external articulation element of the structure and the male (27) end constituting the internal articulation element of the structure are outside the joint.

15. A use of a rotary joint according to any one of Claims 1 to 20 for arms for loading or unloading petroleum or chemical products, which arms are liable to be subjected to great variations in temperature, characterised in that the external tube (18A) of the product line is free to expand or contract and a rigid location of said product line on the structure is provided at (31), the internal tube (17A) is free to expand or contract as a result of two eccentric rotation means provided at the joint (40) and at the joint (50).

16. A use according to Claim 15, characterised in that bolting (32) unites a collar (33) connected to the external tube (18A) of the product line with a rotation means (34) of the external structural element (18), with the interposition of a thermal insulator (35).

17. A use of a rotary joint according to any one of Claims 1 to 10 and relating to the arms for loading or unloading petroleum or chemical products, subject to major variations in temperature, characterised in that a rigid fixing means (36) is provided between the external tube (18A) of the product line and the external structure element (18) ; an eccentric rotation means is provided at the joint (40) as at the joint (50).

18. A use of a rotary joint according to any one of Claims 1 to 10 and relating to the arms for loading or unloading petroleum or chemical products, subject to major variations in temperature, characterised in that it comprises a rigid fixing means (36) between the external tube (18A) of the product line and the external structure element (18), a rotary joint (40) with double eccentricity and, in addition, a structure rotation means (37).

19. A use of a rotary joint according to any one of Claims 1 to 10 and relating to a loading or unloading arm of the « marine » type with a structure ; characterised in that the structure is concentric with the product lines (17A) and (18A) both in its internal arm portion (17) and in its external arm portion (18) and in that the thermal insulators (19) are disposed from place to place between the product lines (17A) and (18A) and internal annular projections (38).

**Patentansprüche**

1. Drehgelenk für Einrichtung zur Übertragung von Fluid, mit zwei Drehteilen (I, II), die axial zueinander mit einer relativen Drehfreiheit angebracht sind, und Abdichtmitteln (E1, E2, E3), wobei jedes dieser Teile einen querverlaufenden Bügel aufweist, der senkrecht zu seiner Achse (1, 2) liegt, dadurch gekennzeichnet, daß es eine Vorrichtung zum axialen Einspannen (A-B ; A-B-III ; I) aufweist, die zum Halten der querverlaufenden Bügel parallel zueinander mit einem konstanten Abstand eingerichtet ist, wobei die Einrichtung mit Führungsmitteln (A, B ; A, B, C ; 4, 9-10, 11, 14) der parallel zueinander stehenden Bügel versehen ist, sowohl in relativer Drehung als auch in relativer Translation nach wenigstens einer Kurve, wodurch das Drehgelenk eine Drehung dieser Teile mit relativer quergerichteter Bewegung ihrer Achsen ermöglicht, wobei dem bewegten Produkt eine Abdichtung verliehen wird und die Übertragung von äußeren Kräften, insbesondere axialen, radialen und Biegekräften, von einem der Drehteile auf ein anderes ermöglicht wird.

2. Drehgelenk nach Anspruch 1, dadurch gekennzeichnet, daß die beiden Drehteile exzentrisch montiert sind, nämlich mit der Möglichkeit zur Verschiebung der Achse eines Teils auf dem Umfang eines Kreises, der die Achse des anderen Teils zum Mittelpunkt hat.

3. Drehgelenk nach Anspruch 1, dadurch gekennzeichnet, daß die querverlaufenden Bügel in jeder Translation auf einer ebenen Oberfläche frei sind, die umfangsmäßig begrenzt ist.

4. Drehgelenk nach einem beliebigen der Ansprüche 1 und 2, dadurch gekennzeichnet, daß es zwischen den Bügeln Kugel-Rollbannen (A und B) aufweist, und eine doppelte Abdichtung (E1, E2).

5. Drehgelenk nach einem beliebigen der Ansprüche 1 und 2, dadurch gekennzeichnet, daß eine exzentrische Doppeldrehung zwischen den Bügeln vorgesehen ist, mit einem Ergänzungsstück (III) der Achse (3), drei Rollen (A, B und C), und einer dreifachen Abdichtung (E1, E2, E3).

6. Drehgelenk nach Anspruch 3, dadurch gekennzeichnet, daß das Teil (I) die Form eines ringförmigen einhüllenden Bügels einnimmt, und das Teil (II) die Form einer ringförmigen Bügelplatte, die im Inneren des einhüllenden Bügels mit einem Spiel gleitfähig ist ; wobei der ringförmige einhüllende Bügel im Inneren seines einhüllenden Teils vorgesehen ist und auf beiden Seiten der Bügelplatte Abdichtfutter (5) mit Lippen (5a) ; wobei der einhüllende Bügel ferner ein Abstreifergelenk (6) aufweist, um die Ablagerungen zu beseitigen, die durch das von der Einrichtung transportierte Produkt zurückgelassen werden, und zwar bei der relativen Verschiebung der Teile (I und II).

7. Drehgelenk nach Anspruch 6, dadurch gekennzeichnet, daß die Futter eine volle trapezoide Form mit einer Krümmung der großen Basis und einer Kantenverstärkung haben.

8. Drehgelenk nach Anspruch 6, dadurch gekennzeichnet, daß der einhüllende Bügel (I) wie die Bügelplatte (II) mit gehärteten Scheiben (8) versehen sind, die dazu ausgelegt sind, Kugel-Rollbahnen (9) zu bilden, welche in Halterungen (10) gehalten werden.

9. Drehgelenk nach Anspruch 6, dadurch gekennzeichnet, daß die Bügelplatte (II) wenigstens axial bezüglich der Abdichtfutter und des Abstreifergelenks einen Vorrat vom Typ Wolframkarbit aufweist.

10. Drehgelenk nach Anspruch 6, dadurch gekennzeichnet, daß die Bügelplatte aufgeschweißte Teile (4A) in einem Material aufweist, das mit der Reibung des Abstreifers (6) und der Abdichtung der Futter (5) verträglich ist.

11. Verwendung des Drehgelenks nach einem der Ansprüche 1 bis 10 mit Lade- oder Entladearmen für Mineralölerzeugnisse oder chemische Produkte, die dafür geeignet sind, größeren Temperaturveränderungen ausgesetzt zu werden, dadurch gekennzeichnet, daß die Arme eine Trägerstruktur (16, 17, 18) für eine Produktlinie (16A, 17A, 18A) haben ; wobei die Produktlinie an der Aufnahme bestimmter Kräfte beteiligt ist, wobei sie einstückig mit der Struktur ausgelegt ist, wobei ein Gelenk auf der Höhe des Innenrohr/Außenrohr-Drehgelenks (40) vorgesehen ist und auf der Höhe des Innenrohr/Sockel-Drehgelenks (50).

12. Verwendung nach Anspruch 11, dadurch gekennzeichnet, daß das Außenrohr so nah wie möglich an dem Gelenk 40 mit der Struktur einstückig ausgelegt ist, und auf der äußeren Struktur gleitfähig ist und das Innenrohr des Produktes (17A) in einem Punkt einstückig ist und in anderen Punkten der Verbindung mit der Struktur aufgrund von Gleitlagern (19) mit thermischer Isolierung gleitfähig ist.

13. Verwendung nach Anspruch 12, dadurch gekennzeichnet, daß eine Bolzenverbindung (20) die Verbindung zwischen den externen Gelenkelementen der Produktlinie (18A) und der Struktur (18) mit Zwischenlagerung einer thermischen Isolierung herstellt ; wobei das äußere Element der Produktlinie ein Bügel (22) und das äußere Element der Struktur ein Gegenstück (23) ist ; und eine weitere Bolzenverbindung (24) die Verbindung zwischen den internen Gelenkelementen der Produktlinie (17a) und der Struktur (17) mit Zwischenlagerung einer thermischen Isolierung (25) herstellt ; wobei das innere Element der Produktlinie eine Buchse mit Kragen (26) ist und das innere Element der Struktur ein Ansatzstück (27) ist ; wobei Rollen (28) zwischen dem Gegenstück (23) und dem Ansatzstück (27) eingesetzt sind ; und ein drehbares Abdichtfutter (29) zwischen den Bügeln (22) und der Buchse mit Kragen (26) angeordnet ist.

14. Verwendung nach Anspruch 13, dadurch gekennzeichnet, daß das Gegenstück (23), welches das äußere Gelenkelement der Struktur bildet, und das Ansatzstück (27), welches das innere Gelenkelement der Struktur bildet, sich außerhalb des Gelenkes befinden.

15. Verwendung des Drehgelenkes nach einem der Ansprüche 1 bis 10, mit Lade- oder Entladearmen für Mineralölerzeugnisse oder chemische Produkte, die geeignet sind, größeren Temperaturänderungen unterworfen zu werden, dadurch gekennzeichnet, daß das Außenrohr (18A) der Produktlinie die Möglichkeit hat, sich auszudehnen oder zusammenzuziehen und eine steife Befestigung der Produktlinie auf der Struktur im Punkt (31) vorgesehen ist, wobei das Innenrohr (17A) die Möglichkeit hat, sich aufgrund zweier exzentrischer Drehungen auszudehnen oder zusammenzuziehen, die am Gelenk (40) und am Gelenk (50) vorgesehen sind.

16. Verwendung nach Anspruch 15, dadurch gekennzeichnet, daß eine Bolzenverbindung (32) einen Bügel (33), der am äußeren Rohr (18A) der Produktlinie verbunden ist, mit einer Drehung (34) des Elementes der äußeren Struktur (18) unter Zwischenlagerung einer thermischen Dichtung (35) verbindet.

17. Verwendung des Drehgelenks nach einem der Ansprüche 1-10 und unter Bezugnahme auf Lade- oder Entladearme für Mineralölerzeugnisse oder chemische Produkte, die größeren Temperaturänderungen unterworfen werden, dadurch gekennzeichnet, daß eine steife Befestigung (36) zwischen dem äußeren Rohr (18A) der Produktlinie und dem äußeren Element der Struktur (18) vorgesehen ist ; wobei eine exzentrische Drehung am Gelenk (40) und am Gelenk (50) vorgesehen ist.

18. Verwendung des Drehgelenkes nach einem der Ansprüche 1 bis 10 und unter Bezugnahme auf Lade- oder Entladearme für Mineralölerzeugnisse oder chemische Produkte, die größeren Temperaturänderungen unterworfen werden, dadurch gekennzeichnet, daß sie eine steife Befestigung (36) zwischen dem äußeren Rohr (18A) der Produktlinie und dem äußeren Element der Struktur (18) aufweist, ein Drehgelenk (40) mit doppeltem Exzenter und ferner eine Struktur (37).

19. Verwendung des Drehgelenkes nach einem der Ansprüche 1 bis 10 und unter Bezugnahme auf Lade- oder Entladearme vom « Marine »-Typ mit Struktur ; dadurch gekennzeichnet, daß die Struktur sowohl in ihrem inneren Armteil (17) als auch in ihrem äußeren Armteil (18) mit der Produktlinie (17A und 18A) konzentrisch ist, und daß die thermischen Isolationen (19) nacheinander zwischen der Produktlinie (17A und 18A) und den inneren ringförmigen Vorsprüngen (38) angeordnet sind.

FIG.1

FIG.2

FIG.5

FIG.5A

FIG.6

FIG.3

FIG.4

2

FIG.7A

FIG.7B

FIG.7C

FIG.7

$\Delta d$

EP 0 161 165 B1

FIG.8

FIG.9

FIG.10

FIG.11

FIG.12

FIG.13

FIG.16

FIG.19

FIG.14

FIG.15

7

*FIG.17*

*FIG.18*

FIG.21

40(FIG 9)

18

19

38

18A

17A

17

50(FIG 11)

16A     16

FIG.23

17 (18)

17A(18A)

19

39

17(18)

38     17A   (18A)

17(18)     19

FIG.22

37

I     II   III

18A     17A

E1     E3

A     E2     B   C

FIG. 20